# EUROPEAN PATENT SPECIFICATION

(11) **EP 0 956 996 B1**
(45) Date of publication and mention of the grant of the patent: **10.08.2005**
(21) Application number: 99201420.9
(22) Date of filing: 07.05.1999
(51) Int. Cl.: B60P 1/26, B60P 1/273

(54) **A trailer**
Anhänger
Remorque

(30) Priority: 11.05.1998 GB 9809968
(43) Date of publication of application: 17.11.1999
(73) Proprietor: NC Agricultural Engineering Company Limited, County Armagh, Northern Ireland (GB)
(72) Inventor: Carson, Wilfred, County Armagh, Northern Ireland (GB); Foster, Brian, County Armagh, Northern Ireland (GB); Nicholl, Norman, County Armagh, Northern Ireland (GB)
(74) Representative: O'Connell, Maura

(56) References cited:
- GB-A- 985 870
- US-A- 3 072 439
- US-A- 3 437 376
- US-A- 3 625 566
- US-A- 3 890 006
- PATENT ABSTRACTS OF JAPAN vol. 010, no. 231 (M-506), 12 August 1986 (1986-08-12) & JP 61 064545 A (KYOKUTO KAIHATSU KOGYO CO LTD), 2 April 1986 (1986-04-02)
- PATENT ABSTRACTS OF JAPAN vol. 014, no. 033 (M-923), 22 January 1990 (1990-01-22) & JP 01 269632 A (KUBOTA LTD), 27 October 1989 (1989-10-27)

## Description

The present invention relates to a trailer. In particular, the present invention relates to a trailer for dumping or tipping a load carried by the trailer.

It is known for dumping or tipping trailers to have rear doors which are pivotably mounted to the container portion of the trailer. Typically, such rear doors are hinged to the upper or rear edges of the container portion and are arranged to pivot outwardly of the trailer. One problem associated with such doors is that that they are maintained in the closed state under the influence of gravity and, unless they are bolted in the closed state, they tend to open during transportation in response to uneven road surfaces. While the provision of a bolt overcomes this problem, the vehicle operator is inconvenienced by having to leave the vehicle each time the bolt needs to be fastened and unfastened. In addition, outwardly pivoting doors tend to suffer from the disadvantage that their movement can be impeded by the environment around the trailer. Another problem associated with conventional rear doors is that they can be prevented from closing fully by any material which projects beyond the rear end of the trailer. A further disadvantage with such trailers is that the door, even when open, tends to obstruct any large load material and prevent it from being dumped from the trailer. Further still, it if is desired to remove the door, such a task typically requires more than one operator and mechanical lifting equipment. Also, when offloading material, mud and debris tend to gather on and around the door which prevent the door from fully closing under gravity.

United States patents US 3,625,566, and US 3,890,006 each disclose a trailer in which the rear door of the container portion is closed in response to movement of the container portion towards the chassis. Moreover, Japanese patent application JP 61064545 discloses a trailer which has the features disclosed in the preamble of Claim 1.

It is an object of the present invention to mitigate the problems associated with the prior art.

Accordingly, the present invention provides a trailer comprising the features of independent claim 1.

Preferred features of the invention are recited in the dependent claims.

The trailer of the invention is advantageous in that it overcomes the above-identified problems with the prior art.

An embodiment of the invention will now be described by way of example and with reference to the accompanying drawings in which:
Figure 1 is a side view of a dump trailer according to the present invention in a transporting mode with a closed door;
Figure 2 is a side view of the trailer of Figure 1 in a dumping mode with an open door;
Figure 3 is a side view of the trailer of Figure 1 in the transporting mode with the door open;
Figure 4 is a detail view of Figure 1 of the drawings;
Figure 5 is a detail view of Figure 2 of the drawings; and
Figure 6 is a detail view of Figure 3 of the drawings.

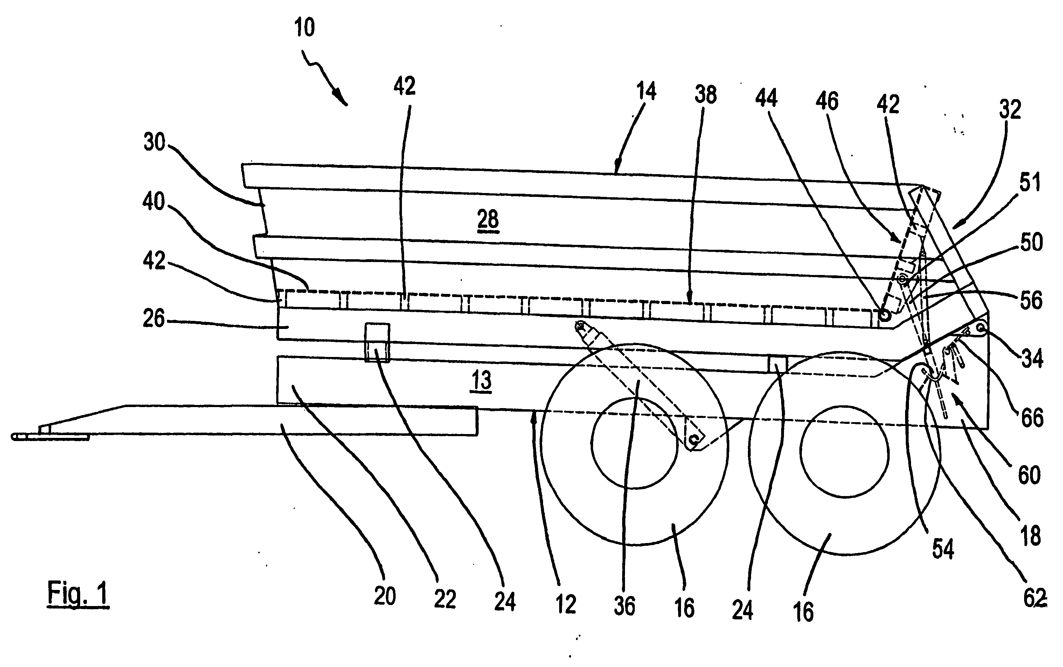

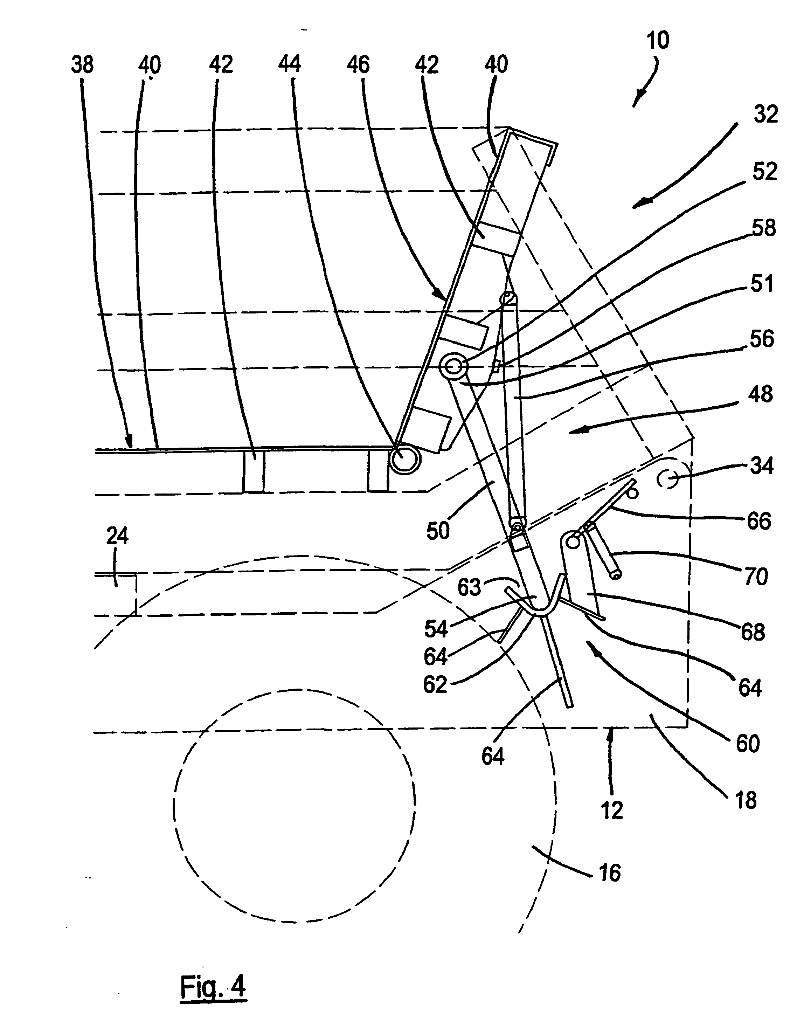

In Figures 1 to 3 of the drawings, hidden features are shown in dashed outline. In Figures 4 to 6, the hidden Figures are shown in solid outline for clarity.

Referring now to Figure 1 there is shown, generally indicated at 10, a trailer according to the present invention. The trailer 10 comprises a body portion in the form of a chassis 12; and a container portion 14. The chassis 12 has a body frame 13 with two sets of wheels 16 (only one wheel of each set visible) mounted adjacent one end 18 of the frame 13 and a tow bar 20 projecting from the other end 22. The chassis 12 further comprises two crossbars 24 which traverse the body 13 in a direction substantially perpendicular to the longitudinal axis of the chassis 12. The chassis 12 is generally of conventional construction and a skilled person will immediately recognise that other conventional chassis types (not shown) are suitable.

The container portion, or container 14, has a base 26, two oppositely disposed side walls 28 (only one visible), a front wall 30 joining the side walls 28 and an open end 32 oppositely disposed to the front wall 30. The open end 32 serves as a mouth or outlet from which a load can be discharged. The base 26 is pivotably mounted on the end 18 of the chassis 12 via a conventional hinge 34 adjacent the open end 32.

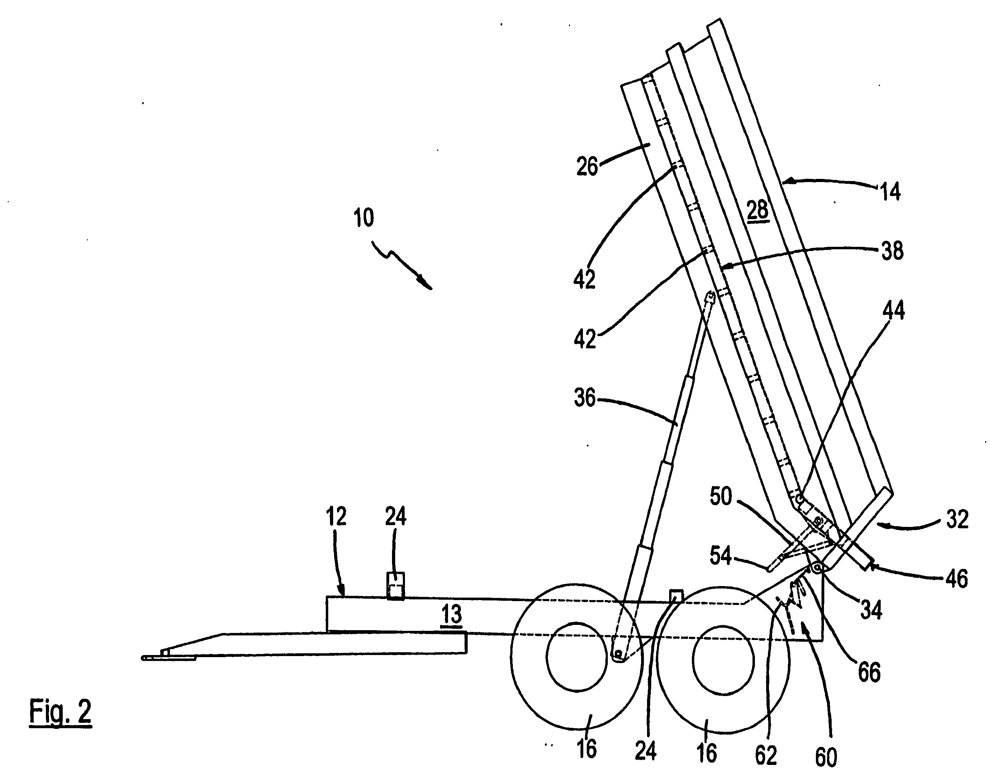

Referring now to Figure 2, trailer actuating means in the form of a conventional hydraulic ram 36 is coupled between the body frame 13 and the base 26 to effect relative pivotal movement of the container 14 and the chassis 12 about the hinge 34. The trailer 10 is thus operable between a transporting mode, in which the container 14 rests on the crossbars 24 and is substantially parallel with the chassis 12 (as depicted in Figure 1), and a dumping mode in which the container 14 is inclined with respect to the chassis 12 supported by the ram 36 (as depicted in Figure 2). In the transporting mode, a load in the form of, for example, quantities of material such as soil, sand, stones or waste materials (not shown) can be deposited, retained and transported in the container 14. In the dumping mode, the material carried in the container 14 tends to slide or fall under the influence of gravity towards and out of the open end 32 of the container 14.

Referring again to Figure 1, a floor 38 (illustrated in dashed outline) is provided in the container 14. The floor 38 comprises a planar portion 40 supported on a plurality of beams 42. The planar portion is shaped and dimensioned to fit into the container 14 and to substantially cover the base 26. The beams 42 rest on, or can alternatively be fixed to, the base 26 and are mutually spaced-apart along the longitudinal length of the base 26 from the front wall 30 to the open end 32. The beams 42 are substantially parallelly disposed with respect to one another and are disposed substantially perpendicularly to the longitudinal axis of the container 14. The arrangement is such that the planar portion 40 is substantially parallel with the base 26.

A door hinge 44 is incorporated into the floor 38 adjacent the open end 32 of the container 14 so that the end portion of the floor 38 is pivotable with respect to the remainder of the floor 38. Said end portion serves as a closure member or door 46. The door 46 is pivotable between a closed state (Figure 1), in which the door 46 is inclined with respect to the base 26 to substantially close the open end 32 of the container 14, and an open state (Figure 2) in which the door 46 rests on the base 26. In the closed state, the door 46 substantially prevents material within the container 14 from being discharged via the open end 32. In the open state, the door 46 serves as a continuation of the floor 38 and does not interfere with the dumping of material. It will be apparent that, under the influence of gravity alone, the door 46 tends to adopt the open state.

The door 46 is hinged to the floor 38 at a location which is inside the container 14 i.e. inward of the open end 32. This reduces the portion of the door 46 which projects beyond the container 14 when in the open state thereby making it easier to open the door 46 in restrictive areas.

In the illustrated embodiment, the floor 38 is separate from the base 26 although it is permanently fixed thereto. In an alternative embodiment (not illustrated) the container 14 does not have a separate floor 38, the base 26 itself serving this purpose. In such an embodiment, the door 46 is pivotably mounted directly on the base 26 of the container 14.

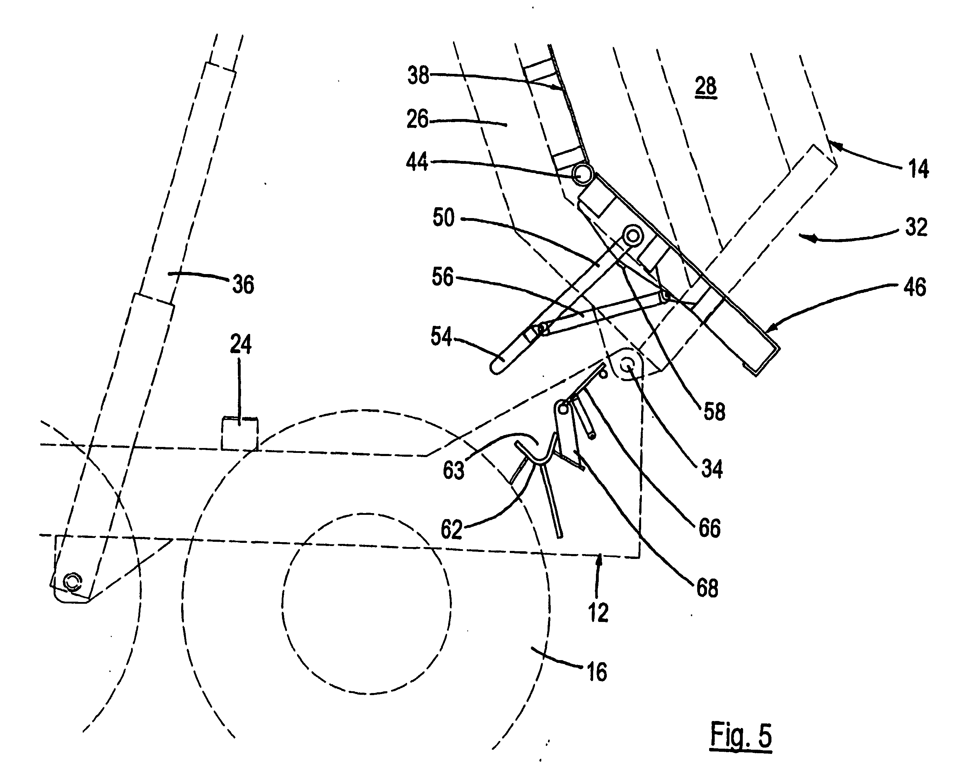

Figure 4 shows, in solid outline, a detail view of the door 46 and the open end 32 of the container 14. Closure member operating means, generally indicated at 48 are provided between the door 46 and the chassis 12 for selectively coupling the door 46 to the chassis 12. The closure member operating means 48 comprises a male member in the form of a rigid rod 50, preferably formed from steel, and a female member or socket means, generally indicated at 60. The rod 50 has one end 51 pivotably coupled to the door 46 via a conventional pin and bush mechanism 52. The other end of the rod 50 is a free end 54. Resilient biasing means in the form of a tension spring 56 has one end connected to the rod 50 at a point between the rod ends 51, 54 and the other end connected to the door 46. The spring 56 is biased to urge the rod 50 in an anti-clockwise direction as viewed in Figure 4. A stop member 58 is fixed to the underside of the door 46 between the rod 50 and the spring 56. The stop member 58 is positioned to limit the pivotal movement of the rod 50 with respect to the door 46 under the influence of the spring 56. Figures 2 and 5 show the rod 50 maintained in abutment with the stop member 58 by the action of the spring 56 - this is the rest position of the rod 50.

The female member or socket means 60 comprises a substantially concave, preferably U-shaped or V-shaped, socket 62 which is fixed to the chassis 12 adjacent the end 18. The socket 62 defines a recess for receiving the free end of the rod 50. The socket 62 is, for example, welded in place and supported by a number of spaced-apart struts 64. The socket 62 has a mouth 63 and is shaped and dimensioned to receive and retain the free end 54 of the rod 50.

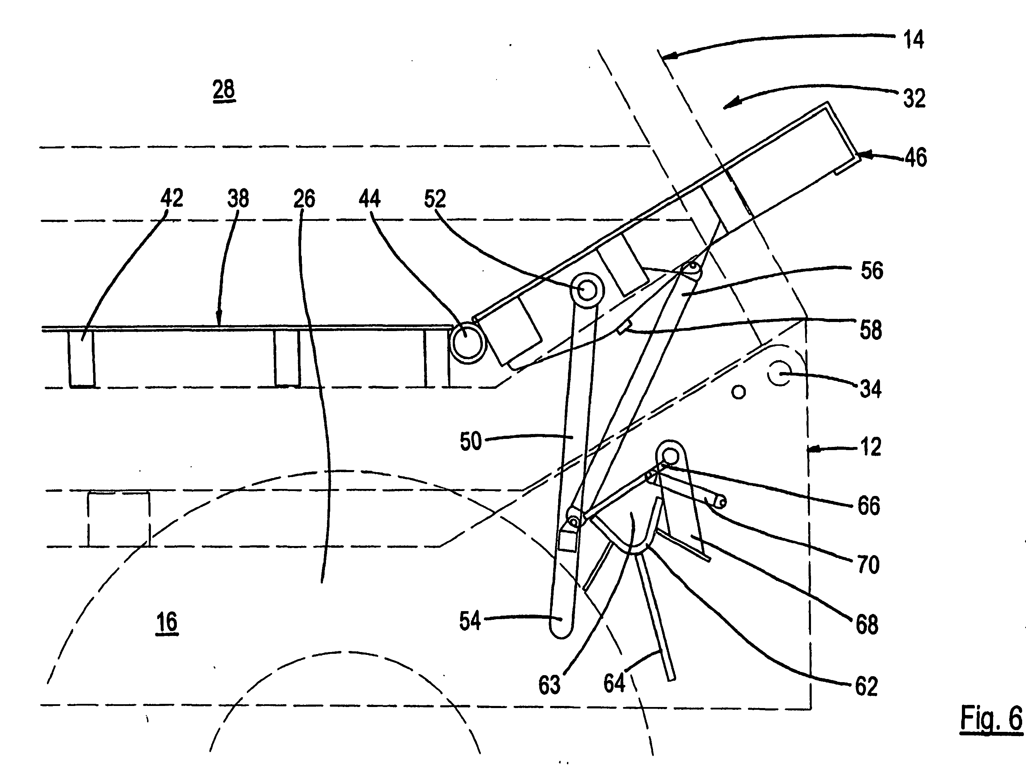

The closure member operating means 48 further comprises means for selectively obstructing the rod 50 in the form of a flap member or flap 66. The flap 66 is pivotably mounted to a support pillar 68, which pillar 68 is fixed to one of the struts 64. The flap 66 is pivotable between a non-obstructing mode (Figure 4), in which the flap 66 does not interfere with the mouth 63 of the socket 62, and an obstructing mode (Figure 6) in which the flap 66 substantially covers the mouth 63 of the socket 62 to prevent the free end 54 of the rod 50 from being received and retained by the socket 62. Biasing means in the form of a flap tension spring 70 has one end fixed to the chassis 12 and the other end fixed to the flap 66 adjacent its pivot point. The flap tension spring 70 serves to maintain the flap 66 in whichever mode it is set by an operator (not shown). It will be noted that the operator may set the flap 66 manually or, in an alternative embodiment, by hydraulic or electrical means (not shown).

Preferably, two closure member operating means (only one shown) are provided on the trailer 10, each being substantially similar to that described above and mutually spaced-apart at opposite sides of the trailer 10. While only one rod member and socket means are required, it will be appreciated that more than two sets of door actuating means can be employed if desired. The components of the closure member operating means can, for example, be formed from mild steel.

In an alternative embodiment (not illustrated) the rod 50 is slidably coupled to the door 46. In such an arrangement, the rod 50 is preferably also pivotable with respect to the door. This may be achieved by providing a respective guide track (not shown) on the door 46 for each rod 50. The rod 50 could have, for example, a rotatable ball or one or more wheels (not shown) mounted to the end 51 for slidable engagement with the guide track.

It will be further appreciated that the rod 50 can alternatively be coupled to the chassis 12 and the socket means 60 mounted on the door 46.

The operation of the dump trailer 10 will now be described with reference to Figures 1 to 6. It will be noted that for clarity not all of the components of the trailer 10, as described above, are necessarily depicted in each of Figures 1 to 6.

In Figures 1 and 4, the trailer 10 is depicted in the transporting mode with the door 46 in the closed state. The free end 54 of the rod 50 is seated in the socket 62 so that the reaction of the socket 62 against the rod 50 maintains the door 46 in the closed state.

Referring now to Figures 2 and 5, the trailer 10 is actuated from the transporting mode into the dumping mode by extension of the ram 36. The ram 36 is, for example, a conventional hydraulic ram connected to the hydraulic system of a towing vehicle (not shown) and operated by the vehicle's operator (not shown). As the ram 36 extends, the container 14 is pivoted, about the hinge 34, away from the chassis 12 causing the free end 54 of the rod 50 to disengage with the socket 62. Since there is no longer a reaction force between the socket 62 and the rod 50, the door 46 pivots, about the door hinge 44, under gravity until it adopts the open state. In Figures 2 and 5, the trailer 10 is depicted in the dumping mode with the door 46 in the open state. In this configuration, material within the container 14 tends to be discharged from the open end 32 of the container under gravity. It will be noted that, in this configuration, the rod 50 is maintained in abutment with the stop member 58 by the action of the spring 56.

To actuate the trailer 10 from the dumping mode to the transporting mode, the ram 36 is contracted to pivot the container 14 towards the chassis 12. During this operation, the free end 54 of the rod 50 engages with the socket 62 and is retained therein. As the container 14 continues to move towards the chassis 12, the reaction of the socket 62 against the rod 50 actuates, or pushes, the door 46 towards and into the closed state. The rod 50 is so dimensioned that, when the container 14 is in the transporting mode, the door 46 is in the closed state. In addition, the action of the spring 56 against the stop bar 58 serves to keep the rod 50 in a position where it will always engage with the socket 62 as the container 14 moves towards the chassis 12. To this end it is also preferred if the socket 62 is dimensioned to prevent the rod 50 from missing the socket 62 and, for example, becoming jammed between the socket 62 and the support pillar 68. It will be noted from the foregoing that the door actuating means positively actuates the door into the closed state against gravity and maintains it in the closed state. It will also be noted that, throughout the operations described above, the flap 66 is set in the non-obstructing mode.

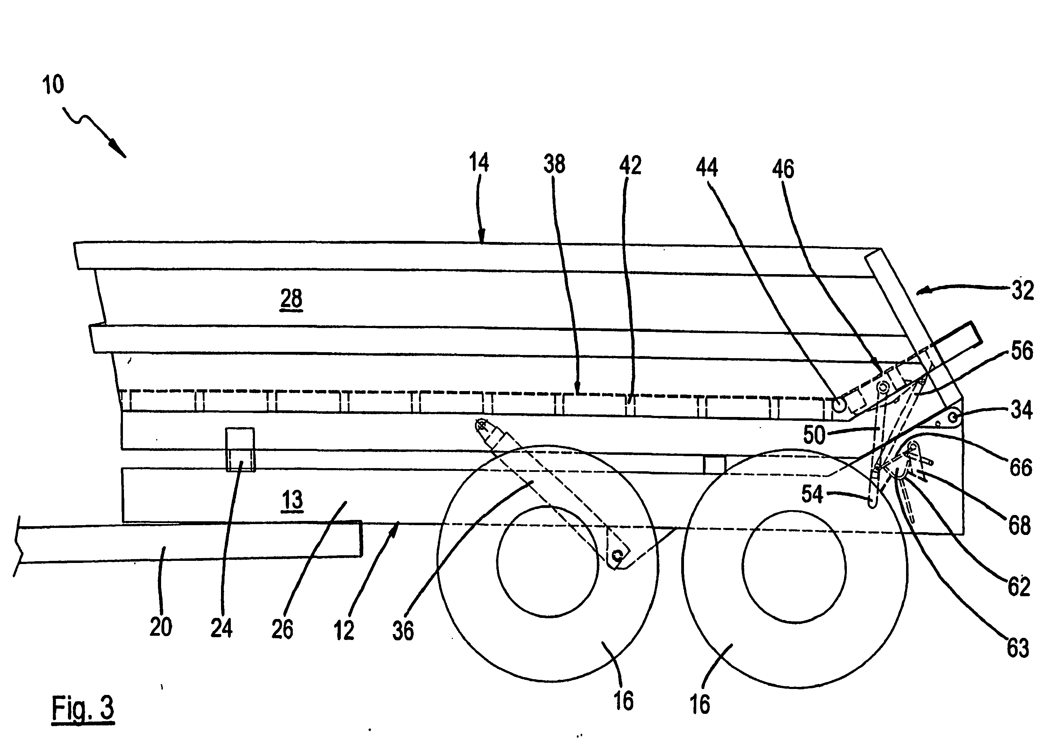

The foregoing describes the tailer in a first mode of operation. However, in a second mode of operation the operator may wish the door 46 to always remain in the open state whether the trailer is in dumping mode or not - for example, the operator may wish to transport a load (not shown) which is longer than the container 14. To achieve this, the operator manually sets the flap 66 to the obstructing mode as illustrated in Figures 3 and 6. The flap 66 substantially covers the mouth 63 of the socket 62 thereby preventing the socket from receiving and retaining the free end 54 of the rod 50. As the container 14 is pivoted towards the chassis 12 the free end 54 of the rod 50 engages with the flap 66. The flap 66 is inclined with respect to the path of the free end 54 so that the free end 54 slides along the flap 66 as the container 14 continues to move towards the chassis 12 until the free end 54 slips off the flap 66 and proceeds beyond the socket 62. Thus, when the trailer 10 is in the - transporting mode, the free end of the rod is not seated in the socket 62 nor is it supported by any other surface. Since there is no reaction force to enable the rod 50 to push the door 46 in to the closed state, the door 46 remains in the open state under gravity. It will be noted that, in this configuration, the spring 66 maintains a mid-section of the rod 50 in abutment with the socket 62 so that the rod 50 cannot pivot freely during transit. It will be apparent that the rod 50 and socket 62 arrangement can thus selectively actuate the door 46 unto the closed state.

In an alternative embodiment (not illustrated) the socket means 60 takes the form of a track or groove mounted on or formed in the door 46; and the rod 50 is rigidly fixed to the chassis 12 adjacent the end 18 in approximately the position illustrated in Figure 1. The free end of the rod 50 is now the end 51. The end 51 can thus engage and disengage with the track or groove to actuate the door 46 as the container portion 14 pivots with respect to the chassis 12

The trailer 10 depicted in the drawings is of the general type which comprise a container with a base 26 which is upwardly inclined adjacent the open end 32 - these are commonly referred to as "scow end" trailers. While the invention is particularly suited for use with scow end trailers, a skilled person will immediately recognise that the present invention is equally suitable for use with other types of conventional trailer (not shown) not necessarily comprising a scow end.

The trailer according to the present invention has a number of advantages over the aforementioned prior art trailers. Firstly, when in the open state, the door is substantially flush with the floor of the container and does not interfere with the loading or offloading of any material, large or small. Secondly, the operator can readily configure the trailer 10 so that the door 46 is disabled and does not interfere with the operation of the trailer 10 - the door 46 does not, therefore, need to be detached from the trailer and is always readily available for use when required. Furthermore, when operational, the door 46 remains substantially within the boundaries of the trailer proper and is not likely to be impeded by any objects in the environment around the trailer 10. In addition, the door 46 is not necessarily subject to obstruction by objects which, during use, project out of the open end 32 of the container 14 since the upward movement of the door 46 into the closed state tends to push any such objects into the container 14 out of its way. Also, since the door is positively pushed into the closed state, mud and other debris tend not to impede its movement. Further, the door is positively maintained in the closed state without the need for separate bolts or the like. It will also be appreciated that the door 46 and door actuating means 48 are of relatively simple construction and are therefore relatively simple and inexpensive to incorporate into a trailer.

## Claims

1. A trailer comprising a body portion (12); a container portion (14) pivotably mounted on the body portion; means for pivoting (36) the container portion (14) relative to the body portion (12), the container portion (14) having a mouth for discharging a load and a closure member (46) associated with the mouth (32), the closure member (46) being operable between an open state in which the load can be discharged through the mouth (32) and a closed state in which the closure member (46) substantially closes the mouth (32), the closure member (46) being arranged to adopt the open state under gravity; and means for operating (48) the closure member (46) provided between the body portion (12) and the closure member (46) and arranged so that, in a first mode of operation, the operating means is arranged to couple the closure member (46) to the body portion (12) so that, in response to pivotal movement of the container portion (14) towards the body portion (12), the operating means (48) actuates the closure member (46) towards the closed state **characterised in that** the operating means is arranged to selectively couple the closure member (46) to the body portion (12) and, in a second mode of operation, the operating means (48) is arranged not to couple the closure member (46) to the body portion (12) so that, on pivotal movement of the container portion (14) towards the body portion (12), the operating means is prevented from actuating the closure member (46) towards the closed state.

2. A trailer according to Claim 1, in which the container portion (14) is pivotable between a transporting mode, in which the container portion (14) is substantially parallel with the body portion (12), and a dumping mode in which the container portion (14) is inclined with respect to the body portion (12) and the closure member (46) adopts the open state under the influence of gravity, the closure member operating means (48), when in the first mode of operation, actuating the closure member (46) towards the closed state in response to movement of the container portion (14) from the dumping mode to the transporting mode and maintaining the closure member (46) in the closed state when the container portion (14) is in the transporting mode.

3. A trailer according to Claims 1 or 2, in which the closure member operating means (48) comprises at least one male member (50) and at least one co-operating female member (60), the at least one male member (50) and the at least one female member (60) being provided on a respective one of the closure member (46) and the body portion (12) and being arranged so that, when in the first mode of operation, upon movement of the container portion (14) towards the body portion (12), the at least one male member (50) engages with the at least one female member (60) to actuate the closure member (46) towards the closed state.

4. A trailer according to Claim 3, in which the at least one male member (50) has one end (51) pivotably coupled to one of the closure member (46) or the body portion (12), the other end (54) being adapted for engagement with the at least one female member (60).

5. A trailer according to Claim 4, in which the at least one male member (50) is resiliently biased to adopt a rest position when not in engagement with the at least one female member (60).

6. A trailer according to Claim 5, in which a stop member (58) is provided adjacent the said one end, the at least one male member (50) being resiliently biased into abutment against the stop member (58).

7. A trailer according to any of Claims 3 to 6, in which one end (51) of the at least one male member (50) is slidably coupled to one of the closure member (46) or the body portion (12), the other end (54) being adapted for engagement with the at least one female member (60).

8. A trailer according to any of Claims 3 to 7, in which the at least one male member (50) is provided on the closure member (46).

9. A trailer according to any of Claim 3 to 8, in which the at least one female member (60) has a substantially concave cross-section to define a recess for receiving the at least one male member (50).

10. A trailer according to Claim 3, in which the at least one male member (50) has one end fixed to the body portion (12), the at least one female member (60) being provided on the closure member (46) and comprising an elongate groove adopted to slidably receive the free end of the at least one male member (50).

11. A trailer according to any of Claims 3 to 10, in which the closure member operating means (48) includes means for selectively obstructing the at least one male member (80) from engaging with the at least one female member (60) so that, in the second mode of operation, the closure member operating means is prevented from actuating the closure member (46) into the closed state.

12. A trailer according to Claim 11, in which the obstructing means comprises a flap member (66) associated with the at least one female member (60) and operable between an obstructing mode, in which the flap member (66) substantially covers the at least one female member (60) and the at least one male member (50) is prevented from engaging therewith, and a non-obstructing mode in which the flap member (66) does not obscure the at least one female member (60).

13. A trailer according to Claim 12, in which the flap member (66) is pivotably mounted adjacent the at least one female member (60) and is resiliently biased to be retained in whichever mode it adopts.

14. A trailer according to any preceding Claim, in which the container portion (14) has a floor (38) for receiving the load, the closure member being pivotably coupled to the floor (38) adjacent the mouth (32).

15. A trailer according to Claim 14, in which the closure member (46) is pivotably coupled to the floor (38) at an inward location of the container portion (14) with respect to the mouth (32).

16. A trailer according to Claims 2 and 14 in which the body portion (12) comprises a base (26) which supports the floor (38), the base (26) being upwardly inclined adjacent the mouth (32) when in the transportation mode.

## Patentansprüche

1. Anhänger mit einem Körperteil (12); einem Behälterteil (14), der schwenkbar an dem Körperteil angebracht ist; Mitteln zum Schwenken (36) des Behälterteils (14) in bezug zum Körperteil (12), wobei der Behälterteil (14) eine Öffnung zum Ausgeben einer Last und ein mit der Öffnung (32) verknüpftes Verschlusselement (46) aufweist, und das Verschlusselement (46) zwischen einem offenen Zustand, in dem die Last durch die Öffnung (32) ausgegeben werden kann, und einem geschlossenen Zustand steuerbar ist, in dem das Verschlusselement (46) die Öffnung (32) im Wesentlichen verschließt, und das Verschlusselement (46) eingerichtet ist, um unter Schwerkraft den offenen Zustand anzunehmen; und einem Mittel, das zum Bedienen (48) des Verschlusselements (46) zwischen dem Körperteil (12) und dem Verschlusselement (46) vorgesehen ist, und so eingerichtet ist, dass das Bedienungsmittel in einer ersten Betriebsart ausgelegt ist, um das Verschlusselement (46) an den Körperteil (12) so zu koppeln, dass das Bedienungsmittel (48) in Reaktion auf Schwenkbewegung des Behälterteils (14) in Richtung auf den Körperteil (12) das Verschlusselement (46) zum geschlossenen Zustand hin steuert, **dadurch gekennzeichnet, dass** das Bedienungsmittel eingerichtet ist, um selektiv das Verschlusselement (46) mit dem Körperteil (12) zu koppeln, und, in einer zweiten Betriebsart, das Bedienungsmittel (48) eingerichtet ist, um das Verschlusselement (46) nicht mit dem Körperteil (12) zu koppeln, so dass bei Schwenkbewegung des Behälterteils (14) in Richtung auf den Körperteil (12) Steuern des Verschlusselements (46) durch das Bedienungsmittel zum geschlossenen Zustand hin verhindert wird.

2. Anhänger nach Anspruch 1, bei dem der Behälterteil (14) zwischen einer Transportbetriebsart, in der der Behälterteil (14) im Wesentlichen parallel zu dem Körperteil (12) ist, und einer Abkippbetriebsart schwenkbar ist, in der der Behälterteil (14) in Bezug zum Körperteil (12) geneigt ist, und das Verschlusselement (46) den offenen Zustand unter dem Einfluss von Schwerkraft annimmt, wobei das Verschlusselement-Bedienungsmittel (48), wenn es in der erste Betriebsart ist, das Verschlusselement (46) in Richtung auf den geschlossenen Zustand als Reaktion auf Bewegung des Behälterteils (14) aus der Abkippbetriebsart in die Transportbetriebsart steuert und das Verschlusselement (46) im geschlossenen Zustand hält, wenn der Behälterteil (14) in der Transportbetriebsart ist.

3. Anhänger nach Anspruch 1 oder 2, bei dem das Verschlusselement-Bedienungsmittel (48) mindestens ein männliches Element (50) und mindestens ein damit zusammenwirkendes weibliches Element (60) aufweist, wobei das mindestens eine männliche Element (50) und das mindestens eine weibliche Element (60) an einem jeweiligen des Verschlusselements (46) und des Körperteils (12) vorgesehen und so eingerichtet sind, dass, wenn in der ersten Betriebsart, bei Bewegung des Behälterteils (14) in Richtung auf den Körperteil (12) das mindestens eine männliche Element (50) in das mindestens eine weibliche Element (60) eingreift, um das Verschlusselement (46) zum geschlossen Zustand hin zu steuern.

4. Anhänger nach Anspruch 3, bei dem ein Ende (51) des mindestens einen männlichen Elements (50) schwenkbar an einen des Verschlusselements (46) oder des Körperteils (12) gekoppelt ist, und das andere Ende (54) zum Eingriff in das mindestens eine weibliche Element (60) ausgelegt ist.

5. Anhänger nach Anspruch 4, bei dem das mindestens eine männliche Element (50) elastisch vorgespannt ist, um eine Ruheposition anzunehmen, wenn es nicht in Eingriff mit dem mindestens einen weiblichen Element (60) steht.

6. Anhänger nach Anspruch 5, bei dem ein Arretierelement (58) angrenzend an das genannte eine Ende vorgesehen ist, wobei das mindestens eine männliche Element (50) elastisch in Anlage gegen das Arretierelement (58) vorgespannt ist.

7. Anhänger nach einem der Ansprüche 3 bis 6, bei dem ein Ende (51) des mindestens einen männlichen Elements (50) verschiebbar mit einem des Verschlusseiements (46) oder des Körperteils (12) gekoppelt ist, und das andere Ende (54) zum Eingriff in das mindestens eine weibliche Element (60) ausgelegt ist.

8. Anhänger nach einem der Ansprüche 3 bis 7, bei dem das mindestens eine männliche Element (50) an dem Verschlusselement (46) vorgesehen ist.

9. Anhänger nach einem der Ansprüche 3 bis 8, bei dem das mindestens eine weibliche Element (60) einen im Wesentlichen konkaven Querschnitt aufweist, um eine Ausnehmung zum Aufnehmen des mindestens einen männlichen Elements (50) zu begrenzen.

10. Anhänger nach Anspruch 3, bei dem das eine Ende des mindestens einen männlichen Elements starr an dem Körperteil (12) befestigt ist, und das mindestens eine weibliche Element an dem Verschlusselement (46) vorgesehen ist und eine längliche Nut aufweist, die zum gleitenden Aufnehmen des freien Endes des mindestens einen männlichen Elements (50) ausgelegt ist.

11. Anhänger nach einem der Ansprüche 3 bis 10, bei dem das Verschlusselement-Bedienungsmittel (48) Mittel zum selektiven Hindern des mindestens einen männlichen Elements (50) am Eingriff in das mindestens eine weibliche Element (60) einschließt, so dass das Verschlusselement-Bedienungsmittel in der zweiten Betriebsart daran gehindert wird, das Verschlusselement (46) in den geschlossenen Zustand zu steuern.

12. Anhänger nach Anspruch 11, bei dem das Hinderungsmittel ein Klappenelement (66) aufweist, das mit dem mindestens einen weiblichen Element (60) verknüpft ist und zwischen einer Hinderungsbetriebsart, in der das Klappenelement (66) im Wesentlichen das mindestens eine weibliche Element (60) bedeckt und das mindestens eine männliche Element (50) am Eingriff in dieses gehindert wird, und einer Nichtbehinderungsbetriebsart steuerbar ist, in der das Klappenelement (66) nicht das mindestens eine weibliche Element (60) bedeckt.

13. Anhänger nach Anspruch 12, bei dem das Klappenelement (66) schwenkbar angrenzend an das mindestens eine weibliche Element (60) angebracht ist und elastisch vorgespannt ist, um in der Betriebsart gehalten zu werden, die es gerade annimmt.

14. Anhänger nach einem vorhergehenden Anspruch, bei dem der Behälterteil (14) einen Boden (38) zum Aufnehmen der Last aufweist, wobei das Verschlusselement schwenkbar an den Boden (38) angrenzend an die Öffnung (32) gekoppelt ist.

15. Anhänger nach Anspruch 14, bei dem das Verschlusselement (46) schwenkbar an den Boden (38) an einer inneren Stelle des Behälterteils (14) in Bezug zur Öffnung (32) gekoppelt ist.

16. Anhänger nach Anspruch 2 und 14, bei dem das Körperteil (12) eine Basis (26) aufweist, die den Boden (38) abstützt, wobei die Basis (26) angrenzend an die Öffnung (32) nach oben geneigt ist, wenn sie in der Transportbetriebsart ist.

## Revendications

1. Une remorque comportant une partie châssis (12) ; une partie conteneur (14) montée de manière pivotante sur la partie châssis ; un moyen de faire pivoter (36) la partie conteneur (14) par rapport à la partie châssis (12), la partie conteneur (14) étant munie d'un orifice pour déverser une charge et un élément de fermeture (46) associé à l'orifïce (32), l'élément de fermeture (46) étant mobile entre un état ouvert dans lequel la charge peut se déverser par l'orifice (32) et un état fermé dans lequel l'élément de fermeture (46) ferme sensiblement l'orifice (32), l'élément de fermeture (46) étant agencé pour adopter l'état ouvert sous l'action de la pesanteur ; et un moyen d'actionner (48) l'élément de fermeture (46) prévu entre la partie châssis (12) et l'élément de fermeture (46) et agencé de façon à ce que, dans un premier mode de fonctionnement, le moyen d'actionnement est agencé pour accoupler l'élément de fermeture (46) à la partie châssis (12) de manière que, en réponse au mouvement de pivot de la partie conteneur (14) vers la partie châssis (12) le moyen d'actionnement (48) actionne l'élément de fermeture (46) vers l'état fermé, **caractérisée par le fait que** le moyen d'actionnement est agencé pour accoupler de manière sélective l'élément de fermeture (46) à la partie châssis (12) et, dans un deuxième mode de fonctionnement, le moyen d'actionnement (48) est agencé pour ne pas accoupler l'élément de fermeture (46) à la partie châssis (12) de manière que, lors du mouvement de pivot de la partie conteneur (14) vers la partie châssis (12), il n'est pas permis au moyen d'actionnement d'actionner l'élément de fermeture (46) vers l'état fermé.

2. Une remorque selon la revendication 1, dans laquelle la partie conteneur (14) est pivotante entre un mode de transport, dans lequel la partie conteneur (14) est sensiblement parallèle à la partie châssis (12), et un mode de déchargement dans lequel la partie conteneur (14) est inclinée par rapport à la partie châssis (12) et l'élément de fermeture (46) adopte l'état ouvert sous l'action de la pesanteur, le moyen d'actionnement (48) de l'élément de fermeture, quand il est dans le premier mode de fonctionnement, actionnant l'élément de fermeture (46) vers l'état fermé en réponse au mouvement de la partie conteneur (14) depuis le mode de déversement jusqu'au mode de transport et maintenant l'élément de fermeture (46) dans l'état fermé quand la partie conteneur (14) est en mode de transport.

3. Une remorque selon les revendications 1 ou 2, dans laquelle lé moyen d'actionnement (48) de l'élément de fermeture comporte au moins un élément mâle (50) et au moins un élément femelle (60) coopérant, le au moins un élément mâle (50) et le au moins un élément femelle (60) étant prévus sur un respectif de l'élément de fermeture (46) et de la partie châssis (12) et étant agencés de manière à ce que, en premier mode de fonctionnement, lors du mouvement de la partie conteneur (14) vers la partie châssis (12), le au moins un élément mâle (50) s'engage avec le au moins un élément femelle (60) pour actionner l'élément de fermeture (46) vers l'état fermé.

4. Une remorque selon la revendication 3, dans laquelle le au moins un élément mâle (50) a une extrémité (51) accouplée de manière pivotante à un de l'élément de fermeture (46) ou de la partie châssis (12), l'autre extrémité (54) étant adaptée pour l'engagement avec le au moins un élément femelle (60).

5. Une remorque selon la revendication 4, dans laquelle le au moins un élément mâle (50) est sollicité par résilience pour adopter une position de repos quand il n'est pas en engagement avec le au moins un élément femelle (60).

6. Une remorque selon la revendication 5, dans laquelle un élément d'arrêt (58) est prévu en position adjacente à ladite une extrémité, le au moins un élément mâle (50) étant sollicité par résilience pour abouter à l'élément d'arrêt (58).

7. Une remorque selon une quelconque des revendications 3 à 6, dans laquelle une extrémité (51) du au moins un élément mâle (50) est accouplée de manière coulissante à un de l'élément de fermeture (46) ou de la partie châssis (12), l'autre extrémité (54) étant adaptée pour s'engager avec le au moins un élément femelle (60).

8. Une remorque selon une quelconque des revendications 3 à 7, dans laquelle le au moins un élément mâle (50) est prévu sur l'élément de fermeture (46).

9. Une remorque selon une quelconque des revendications 3 à 8, dans laquelle le au moins un élément femelle (60) a une section sensiblement concave pour définir un renfoncement destiné à recevoir le au moins un élément mâle (50).

10. Une remorque selon la revendication 3, dans laquelle le au moins un élément mâle a une extrémité fixée de façon rigide à la partie châssis (12), le au moins un élément femelle étant prévu sur l'élément de fermeture (46) et comportant une rainure allongée adaptée pour recevoir de façon coulissante l'extrémité libre du au moins un élément mâle (50).

11. Une remorque selon une quelconque des revendications 3 à 10, dans laquelle le moyen d'actionnement (48) de l'élément de fermeture comporte un moyen d'empêcher de manière sélective le au moins un élément mâle (50) de s'engager avec le au moins un élément femelle (60) de sorte que, dans le deuxième mode de fonctionnement, il n'est pas permis au moyen d'actionnement de l'élément de fermeture d'actionner l'élément de fermeture (46) pour le mettre en état fermé.

12. Une remorque selon la revendication 11, dans laquelle le moyen d'obstruction comprend un élément volet (66) associé avec le au moins un élément femelle (60) et mobile entre un mode d'obstruction, dans lequel l'élément volet (66) couvre sensiblement le au moins un élément femelle (60) et où il n'est pas permis au au moins un élément mâle (50) de s'y engager, et un mode de non-obstruction dans lequel l'élément volet (66) ne recouvre pas le au moins un élément femelle (60).

13. Une remorque selon la revendication 12, dans laquelle l'élément volet (66) est monté de façon pivotante en position adjacente au au moins un élément femelle (60) et est sollicité par résilience pour être retenu dans quel que soit le mode qu'il adopte.

14. Une remorque selon l'une quelconque des revendications précédentes, dans laquelle la partie conteneur (14) est munie d'un plancher (38) destiné à recevoir la charge, l'élément de fermeture étant accouplé de façon pivotante au plancher (38) en position adjacente à l'orifice (32).

15. Une remorque selon la revendication 14, dans laquelle l'élément de fermeture (46) est accouplé de façon pivotante au plancher (38) à un emplacement intérieur de la partie conteneur (14) par rapport à l'orifice (32).

16. Une remorque selon les revendications 2 et 14, dans laquelle la partie châssis (12) comporte une base (26) qui soutient le plancher (38), la base (26) étant inclinée vers le haut en position adjacente à l'orifice (32) pendant le mode de transport.
